# EUROPEAN PATENT APPLICATION

(11) **EP 3 051 480 A1**
(43) Date of publication of application: **03.08.2016**
(21) Application number: 13894748.6
(22) Date of filing: 27.09.2013
(51) Int. Cl.: G06Q 30/00

(54) **ANTI-COUNTERFEITING VERIFICATION SYSTEM**

(71) Applicant: Kang, Chia-Ming, Yunlin County, Taiwan 632 (TW)
(72) Inventor: Kang, Chia-Ming, Yunlin County, Taiwan 632 (TW)
(74) Representative: Lang, Christian
(86) International application number: PCT/CN2013/084427
(87) International publication number: WO 2015/042857

(57) **Abstract**

An anti-counterfeit verification system is provided, including at least one verification information, a database module and a consumer terminal. The database module is for storing the verification information, and the consumer terminal can acquire a verification-information-to-be-verified through a sale terminal. When the sale terminal transmits an information to activate verification to the database module, the consumer terminal can transmit the verification-information-to-be-verified to the database module in a preset period to be verified. The sale terminal must transmit the information to activate verification to the database module so that the consumer terminal can conduct verification in the preset period.

## Description

### BACKGROUND OF THE INVENTION

### Field of the Invention

The present invention relates to an anti-counterfeit verification system.

### Description of the Prior Art

In recent years, due to development of technology, counterfeiting techniques of many illegal counterfeiters continues to develop; therefore, a consumer are unable to distinguish the authenticity of many products on the market, and the consumer right cannot be guaranteed.

In a prior art as disclosed in TWM423879, a 2D bar code is printed on a package for user to verify the authenticity of products through network. Because the 2D bar code is revealed, the 2D bar code is counterfeited more easily. In addition, a printer printing the 2D bar code may repeat printing the package to sell, and the consumer may be cheated and buy a counterfeit. Furthermore, a verification process of the 2D bar code has no time or other verification limits, so anyone who can acquire the 2D bar code can verify the 2D bar code at any time. Hence, there is still room for improvement.

The present invention has arisen to mitigate and/or obviate the afore-described disadvantages.

### SUMMARY OF THE INVENTION

The major object of the present invention is to provide an anti-counterfeit verification system which allows a user to verify an authenticity of a product and prevents a counterfeiter from counterfeit a verification information.

To achieve the above and other object, an anti-counterfeit verification system is provided, including a verification information, a database module and a consumer terminal. The verification information can be accompanyable with an object to form a verification-information-to-be-verified. The database module includes a storing unit and a processing unit, and the storing unit is for storing the verification information. The consumer terminal can acquire the verification-information-to-be-verified through a sale terminal, when the sale terminal transmits an information to activate verification to the database module, the consumer terminal can transmit the verification-information-to-be-verified to the database module in a preset period; when the consumer terminal transmits the verification-information-to-be-verified to the database module in the preset period, the processing unit can compare the verification-information-to-be-verified with the verification information in the storing unit and record a verification result, and the processing unit transmits the verification result to the consumer terminal.

Specifically, the verification information includes a public examination data and a verification set, the verification set includes a covered verification data, the public examination data and the covered verification data correspond to each other, the covered verification data is covered and selectively irreversibly revealable, once the covered verification data is revealed, the covered verification data is unable to recover to an original state, the storing unit is for storing the public examination data and the covered verification data, the consumer terminal is allowable to transmit a covered verification data to be verified of the verification-information-to-be-verified to the database module in the preset period, when the consumer terminal transmits the covered verification data to be verified to the database module in the preset period, the processing unit compares the covered verification-information-to-be-verified with the covered verification data in the storing unit and record a verification result, and the processing unit transmits the verification result to the consumer terminal.

The verification-information-to-be-verified includes a public examination data to be verified, the verification result is stored in the storing unit, the consumer terminal can transmit the public examination data to be verified to the database module, the processing unit can compare the public examination data to be verified with the public examination data in the storing unit to determine if they are identical, and if the public examination data to be verified and the public examination data in the storing unit are identical, the processing unit can transmit the verification result corresponding to the public examination data to the consumer terminal.

The anti-counterfeit verification system further includes a user end, the user end includes the verification information which is formed by one verification set of the verification sets and one public examination data of the public examination data, and the public examination data and the verification set correspond to each other.

The public examination data are non-repeated, and the verification sets are non-repeated.

The public examination data are repeated, and the verification sets are non-repeated.

The verification set of the verification information further includes a checking data, the processing unit can compute and identify a corresponding relation between the checking data and the covered verification data, and when the user end transmits the public examination data of the verification information and the checking data to the database module, the processing unit saves the public examination data of the verification information, the checking data and the covered verification data to the storing unit.

The verification set is printed on a surface of a product or a label paper via a printing device, the checking data and the covered verification data form a tear line therebetween, when the user end transmits the public examination data of the verification information and the checking data to the database module, the checking data and the covered verification data are separable through tearing the tear line.

The anti-counterfeit verification system includes a network server, the network server is connected with the database module, the network server includes a rear-end page, the user end can transmit the public examination data of the verification information and the checking data to the database module through the rear-end page.

The network server further includes a front-end page, the consumer terminal can transmit the covered verification data to be verified of the verification-information-to-be-verified to the database module.

Therefore, when the consumer terminal receives the verification-information-to-be-verified, the sale terminal must transmit the information to activate verification to the database module so that the consumer terminal can conduct verification. The consumer terminal must conduct verification in the preset period so that people who receives the verification-information-to-be-verified must conduct verification in the preset period, and counterfeiters cannot counterfeit the verification-information-to-be-verified easily.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a drawing showing a verification information of the present invention;
Fig. 2 is a drawing showing a silver coat on a verification-information-to-be-verified of the present invention has not been removed;
Fig. 3 is a drawing showing a silver coat on a verification-information-to-be-verified of the present invention has been removed;
Fig. 4 is a framework of the present invention;
Fig. 5 is a drawing showing a public examination data of the present invention;
Fig. 6 is a drawing showing a verification set of the present invention; and
Fig. 7 is a drawing showing the verification set without a tear line of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

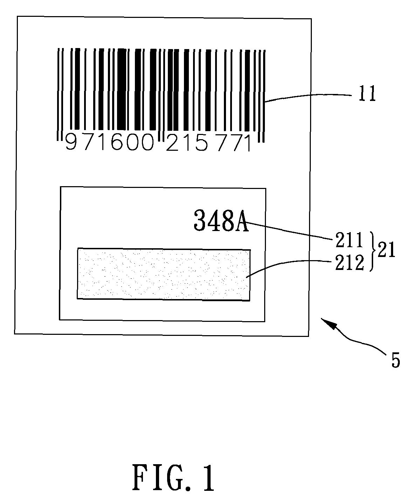

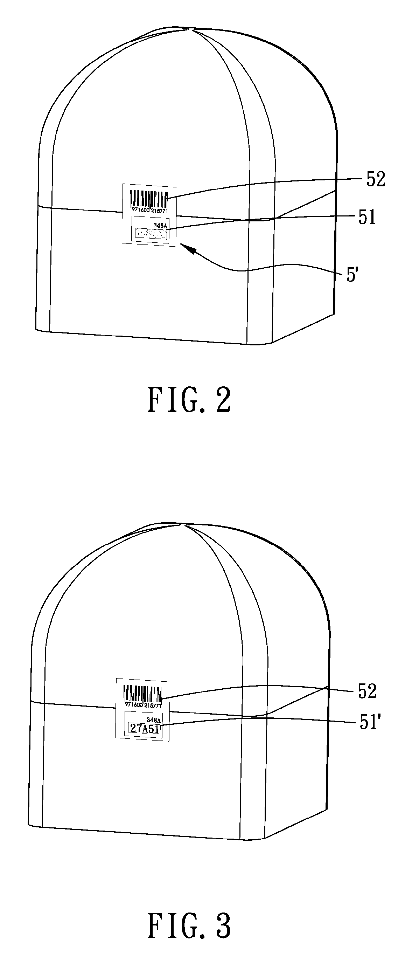

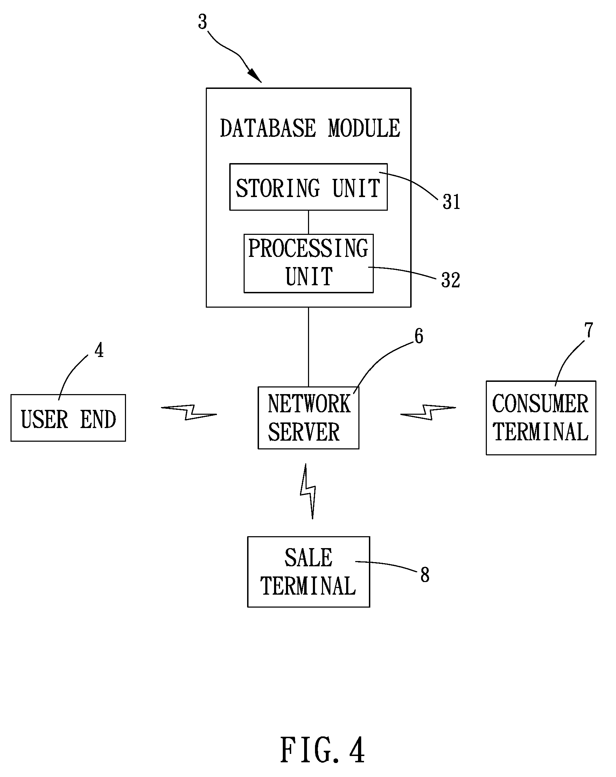

Please refer to Figs. 1 to 4 for an anti-counterfeit verification system of the present invention, including a verification information 5, a database module 3 and a consumer terminal 7.

The verification information 5 can be accompanyable with an object to form a verification-information-to-be-verified 5', and the verification-information-to-be-verified 5' is provided on a sealing portion of a product. In this embodiment, the verification information 5 includes a public examination data 11 and a verification set 21, the verification set 21 includes a covered verification data 212, the public examination data 11 and the covered verification data 212 correspond to each other, the covered verification data 212 is covered and selectively irreversibly revealable, once the covered verification data 212 is revealed, the covered verification data 212 is unable to recover to an original state. More specifically, the covered verification data 212 is covered by a silver coat which can be removed selectively, and the silver coat can help to prevent the covered verification data 212 from being counterfeited.

The database module 3 includes a storing unit 31 and a processing unit 32, and the storing unit 31 is for storing the verification information 5. Specifically, the storing unit 31 is for storing the public examination data 11 and the covered verification data 212, the consumer terminal 7 can acquire the verification-information-to-be-verified 5' through a sale terminal 8, when the sale terminal 8 transmits an information to activate verification to the database module 3, the consumer terminal 7 can transmit the verification-information-to-be-verified 5' to the database module 3 in a preset period; when the consumer terminal 7 transmits the verification-information-to-be-verified 5' to the database module 3 in the preset period, and the processing unit 32 can compare the verification-information-to-be-verified 5' with the verification information 5 in the storing unit 31 and record a verification result. More specifically, the consumer terminal 7 can transmit a covered verification data to be verified 51 of the verification-information-to-be-verified 5' to the database module 3 in the preset period, when the consumer terminal 7 transmits the covered verification data to be verified 51 to the database module 3 in the preset period, the processing unit can compare the covered verification data to be verified 51 with the covered verification data 212 in the storing unit 31 and record the verification result, and the processing unit 32 transmits the verification result to the consumer terminal 7.

Please refer to Figs. 1 to 6, a preferred embodiment of the present invention further includes a user end 4. The user end 4 includes the verification information 5 which is formed by one verification set 21 of the verification sets 21, 22 and one public examination data 11 of the public examination data 11, 12, and the public examination data 11 and the verification set 21 of the verification information 5 correspond to each other. It is to be noted that the public examination data 11, 12 are non-repeated, and the verification sets 21, 22 are also non-repeated. Each said public examination data 11, 12 are 1D bar code, and each said public examination data 11, 12 are unique and non-repeated with other public examination data 11, 12. Take one said public examination data 11 for example, the public examination data 11 can be read via a machine for a user to check related information of a product or an object, for example, the price, the place, and/or the manufacturer of the product. However, in other embodiments, the public examination data may be a 2D bar code. Of course, in other embodiments, the public examination data may be repeated.

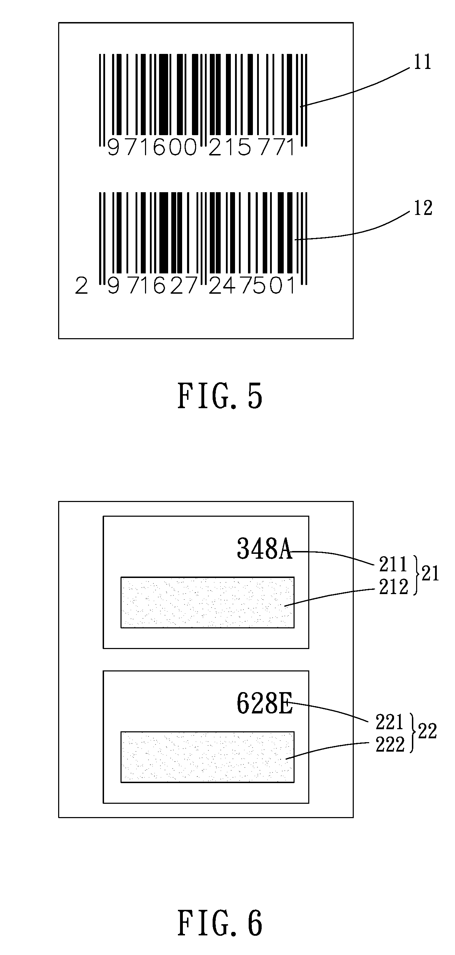

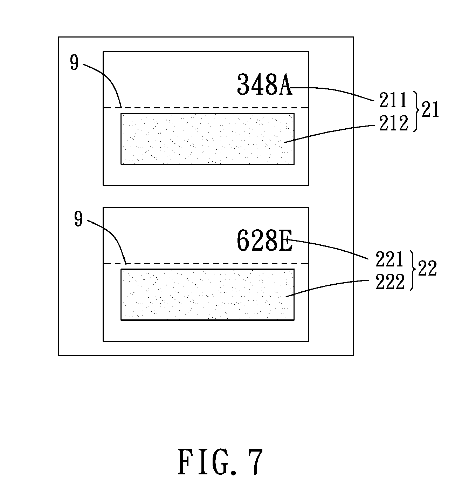

Preferably, the verification set 21 of each said verification information 5 further includes a checking data 211. As shown in Fig. 6, the verification sets 21, 22 respectively include a checking data 211, 221 and a covered verification data 212, 222 corresponding to the checking data 211, 221. The verification sets 21, 22 are non-repeated, the verification sets 21, 22 are unique and non-repeated with other verification sets 21, 22, and the verification sets 21, 22 are printed on a surface of a product or a label paper via a printing device. Specifically, the covered verification data 212 is covered and selectively irreversibly revealable, once the covered verification data 212 is revealed, the covered verification data 212 is unable to recover to an original state. More specifically, the covered verification data 212, 222 are covered by the silver coat which can be removed selectively, and the silver coat can help to prevent the covered verification data 212, 222 from being counterfeited. Each of the checking data 211, 221 and the covered verification data 212, 222 is a sequential number composed of random numbers. It is to be noted that the processing unit 32 can compute and identify a corresponding relation between the checking data 211, 221 and the covered verification data 212, 222, and when the user end 4 transmits the public examination data 11 of the verification information 5 and the checking data 211 to the database module 3, the processing unit 32 saves the public examination data 11 of the verification information 5, the checking data 211 and the covered verification data 212 to the storing unit 31. For example, the covered verification data 212 can be computed with a formula to be the checking data 211, when the database module 3 receives the checking data 211, the checking data 211 is computed through the processing unit 32 to acquire the covered verification data 212. It is understandable that the processing unit 32 can also compute the covered verification data 212 to acquire the checking data 211. Preferably, please refer to Fig. 7. The checking data 211, 221 and the covered verification data 212, 222 form a tear line 9 therebetween, when the user end 4 transmits the public examination data 11 of the verification information 5 and the checking data 211 to the database module 3, the checking data 211, 221 and the covered verification data 212, 222 are separable through tearing the tear line 9. Therefore, even if people acquire the covered verification data 212, 222, they are unable to know the public examination data 11 corresponding to the covered verification data 212, 222 and unable to counterfeit.

In other words, the user end 4 can pick one of the public examination data 11 and one of the verification sets 21 randomly and combine one said public examination data 11 and one said verification sets 21 which are picked to form the verification information 5 so that the public examination data 11, the checking data 211 and the covered verification data 212 correspond to one another. When the user end 4 transmits the public examination data 11 of the verification information 5 and the checking data 211 to the database module 3, the processing unit 32 saves the public examination data 11 of the verification information 5, the checking data 211 and the covered verification data 212 to the storing unit 31. More specifically, when the user end 4 transmits the public examination data 11 of the verification information 5 and the checking data 211 to the database module 3, the processing unit 32 can compute the checking data 211 to acquire the covered verification data 212 and save the public examination data 11, the checking data 211 and the covered verification data 212 in the storing unit 31; therefore, a printing manufacturer who prints the public examination data 11 and the verification set 21 cannot know the verification information 5 which is formed by a combination of the public examination data 11 and the verification set 21, and the printer manufacturer cannot counterfeit the product. In addition, because the covered verification data 212 is covered by the silver coat, the user end 4 which acquires the verification set 22 cannot know a content of the covered verification data 212. Therefore, the public examination data 11 and the verification set 21 can be prevented from being counterfeited.

Specifically, the preferred embodiment of the present invention further includes a network server 6, the network server 6 is connected with the database module 3, the network server 6 includes a rear-end page, the user end 4 can transmit the public examination data 11 of the verification information 5 and the checking data 211 to the database module 3 through the rear-end page. For example, the user end 4 can enter an account and a password exclusively belonging to the user end 4 to login the rear-end page, the user end 4 enter the public examination data 11 of the verification information 5 and the checking data 211 through the rear-end page to the database module 3, when the user end 4 transmits the public examination data 11 of the verification information 5 and the checking data 211 to the database module 3, the processing unit 32 can compute the checking data 211 to acquire the covered verification data 212 and save the public examination data 11, the checking data 211 and the covered verification data 212 in the storing unit 31. In addition, in other embodiments, the user end can transmit the public examination data of the verification information and the checking data to the database module through communication media such as an application of a mobile phone.

In actual practice, for example, the consumer terminal 8 can purchase the product which is printed with the verification-information-to-be-verified 5' through the user end 4 and sell the product to the consumer terminal 7. When the sale terminal 8 sells the product, the sale terminal 8 transmits the information to activate verification to the database module 3, the consumer terminal 7 can remove the silver coat on the covered verification data to be verified 51 on the product to acquire the covered verification data to be verified 51 and transmit the covered verification data to be verified 51' to the database module 3 in the preset period so as to conduct verification. More specifically, the sale terminal 8 can enter an account and a password exclusively belonging to the sale terminal 8 through the rear-end page to login the rear-end page and enter one siad information to activate verification to the database module 3, wherein the information to activate verification may be a preset period period (for example, 24 hours). Therefore, the consumer terminal 7 must transmit one said covered verification data to be verified 51' of the verification-information-to-be-verified 5' to the database module 3. It is understandable that the consumer terminal can transmit the information to activate verification through communication media such as the application of the mobile phone so that the consumer terminal can conduct verification in the preset period. It is to be noted that in other embodiments, the user end may be equal to the consumer terminal; in other words, the user end may be the consumer terminal selling the product to the consumer terminal, that is, the consumer terminal can acquire the verification-information-to-be-verified through the user end.

More specifically, the network server 6 further includes a front-end page, the consumer terminal 7 can transmit the covered verification data to be verified 51' of the verification-information-to-be-verified 5' to the database module 3. When the consumer terminal 7 transmits the covered verification data to be verified 51' to the database module 3 in the preset period, the processing unit 32 can compare the covered verification data to be verified 51' with the covered verification data 212 in the storing unit 31 and records a verification result corresponded (for example, the record shows "verified to be authentic"), and the processing unit 32 transmits the verification result to the consumer terminal 7. For example, if the covered verification data to be verified 51' and the covered verification data 212 in the storing unit 31 are identical, the processing unit 32 transmits a "verified to be authentic" verification frame to the consumer terminal 7 so that the user can know if the product s/he purchased is authentic or not. If the product purchased by the consumer terminal 7 is fake, the sale terminal 8 cannot transmit the information to activate verification, and the consumer terminal 7 cannot conduct verification; therefore, the front-end page can show "non-actuated" to notify the consumer terminal 7 that the product purchased by the consumer terminal 7 may be fake. Preferably, when the consumer terminal 7 enters the front-end page and enters the covered verification data to be verified 51', the front-end page can show a count-down frame to notify the user end 7 when the verification will be finished. In addition, the consumer terminal 7 can transmit the covered verification data to be verified through communication media such as the application of the mobile phone.

Given the above, if the consumer terminal 7 does not conduct verification in the preset period, s/he can take the verification-information-to-be-verified 5' and a purchase breakdown to the sale terminal 8, and the sale terminal 8 can transmit the information to activate verification to the database module 3 so as to prevent people who acquires the verification-information-to-be-verified 5' from conducting verification at any time. If the verification is not successful, the consumer terminal 7 needs to request the sale terminal 8 to actuate a verification process so as to prevent people who acquire the verification-information-to-be-verified 5' from counterfeiting the product. Preferably, the verification-information-to-be-verified 5' is provided on the sealing portion of the product, and after the user tears the product open, the verification-information-to-be-verified 5' is torn apart or damaged and unable to recover to an original state.

The verification-information-to-be-verified 5' includes a public examination data to be verified 52, when the consumer terminal 7 transmits the covered verification data to be verified 51' to the database module 3 to be verified, the verification result is storing united in the storing unit 3, the consumer terminal 7 can transmit the public examination data to be verified 52 to the database module 3, the processing unit 32 can compare the public examination data to be verified 52 with the public examination data 11 in the storing unit 31 to determine if they are identical, and if the public examination data to be verified 52 and the public examination data 11 in the storing unit 31 are identical, the processing unit 32 can transmit the verification result corresponding to the public examination data 11 to the consumer terminal 7. For example, before the consumer terminal 7 has not purchased the product, the consumer terminal 7 can use a communication media to transmit the public examination data to be verified 52 to the database module 3. If the product has be verified, a verification result which shows "verified" will be transmitted to the consumer terminal 7 so that the user can know that the product is fake to prevent the consumer terminal 7 from purchasing a counterfeit. In other embodiments, when the consumer terminal transmits the covered verification data to be verified to the database module, the processing unit can compare the covered verification data to be verified with the covered verification data in the storing unit to determine if they are identical. If the covered verification data to be verified with the covered verification data in the storing unit are identical, the public examination data corresponding to the covered verification data to the consumer terminal, and the consumer terminal can compare the public examination data that the processing unit transmits with the public examination data to be verified to see if they are identical. If the public examination data that the processing unit transmits with the public examination data to be verified are identical, the product that the consumer terminal purchases is authentic; if not, the consumer terminal can know that the product that s/he purchases is fake.

Given the above, the covered verification data is covered and selectively irreversibly revealable, once the covered verification data is revealed, and the covered verification data is unable to recover to an original state. The user end includes the verification information which is formed by one verification set of the verification sets and one public examination data of the public examination data, so the printing manufacturer who prints the public examination data and the verification sets cannot know the verification information formed by the combination of the public examination data and the verification set. In addition, when the consumer terminal acquire the verification-information-to-be-verified, the consumer terminal must transmit the information to activate verification to the database module so as to conduct verification, and the consumer terminal must conduct verification in the preset period. Therefore, through the present invention, people who acquires the verification-information-to-be-verified from counterfeiting the product.

While we have shown and described various embodiments in accordance with the present invention, it should be clear to those skilled in the art that further embodiments may be made without departing from the scope of the present invention.

## Claims

1. An anti-counterfeit verification system, including:
at least one verification information (5), accompanyable with an object to form a verification-information-to-be-verified (5');
a database module (3), including a storing unit (31) and a processing unit (32), the storing unit (31) for storing the verification information (5);
a consumer terminal (7), being able to acquire the verification-information-to-be-verified (5') through a sale terminal (8), when the sale terminal (8) transmits an information to activate verification to the database module (3), the consumer terminal (7) is allowable to transmit the verification-information-to-be-verified (5') to the database module (3) in a preset period; when the consumer terminal (7) transmits the verification-information-to-be-verified (5') to the database module (3) in the preset period, the processing unit (32) compares the verification-information-to-be-verified (5') with the verification information (5) in the storing unit (31) and record a verification result, and the processing unit (32) transmits the verification result to the consumer terminal (7).

2. The anti-counterfeit verification system of claim 1, wherein the verification information (5) includes a public examination data (11) and a verification set (21), the verification set (21) includes a covered verification data (212), the public examination data (11) and the covered verification data (212) correspond to each other, the covered verification data (212) is covered and selectively irreversibly revealable, once the covered verification data is revealed, the covered verification data is unable to recover to an original state, the storing unit (31) is for storing the public examination data (11) and the covered verification data (212), the consumer terminal (7) is allowable to transmit a covered verification data (212) to be verified of the verification-information-to-be-verified (5') to the database module (3) in the preset period, when the consumer terminal (7) transmits the covered verification data (212) to be verified to the database module (3) in the preset period, the processing unit (32) compares the covered verification-information-to-be-verified with the covered verification data in the storing unit (31) and record a verification result, and the processing unit (32) transmits the verification result to the consumer terminal (7).

3. The anti-counterfeit verification system of claim 2, wherein the verification-information-to-be-verified (5') further includes a public examination data (52) to be verified, the verification result is stored in the storing unit (31), the consumer terminal (7) is allowable to transmit the public examination data to be verified (52) to the database module (3), the processing unit (32) compares the public examination data to be verified (52) with the public examination data (11) in the storing unit (31) to determine if they are identical, and if the public examination data to be verified and the public examination data in the storing unit are identical, the processing unit (32) transmits the verification result corresponding to the public examination data to the consumer terminal (7).

4. The anti-counterfeit verification system of claim 2, further including a user end (4), the user end (4) including the verification information (5) which is formed by one verification set (21) of the verification sets and one public examination data (11) of the public examination data, the public examination data (11) and the verification set (21) corresponding to each other.

5. The anti-counterfeit verification system of claim 4, wherein the public examination data (11, 12) are non-repeated, and the verification set (21, 22) are non-repeated.

6. The anti-counterfeit verification system of claim 4, wherein the public examination data (11, 12) are repeated, and the verification sets (21, 22) are non-repeated.

7. The anti-counterfeit verification system of claim 4, wherein the verification set of the verification information further includes a checking data (211), the processing unit (32) is able to compute and identify a corresponding relation between the checking data (211) and the covered verification data (212), and when the user end (4) transmits the public examination data (11) of the verification information (5) and the checking data (211) to the database module (3), the processing unit (32) saves the public examination data (11) of the verification information, the checking data (211) and the covered verification data (212) to the storing unit (31).

8. The anti-counterfeit verification system of claim 7, wherein the verification set (21, 21) is printed on a surface of a product or a label paper via a printing device, the checking data (211) and the covered verification data (212) form a tear line (9) therebetween, when the user end (4) transmits the public examination data (11) of the verification information (5) and the checking data (211) to the database module (3), the checking data and the covered verification data are separable through tearing the tear line (9).

9. The anti-counterfeit verification system of claim 4, further including a network server (6), the network server connected with the database module (3), the network server including a rear-end page, the user end (4) being allowable to transmit the public examination data (11) of the verification information (5) and the checking data (211) to the database module (3) through the rear-end page.

10. The anti-counterfeit verification system of claim 9, wherein the network server (6) further includes a front-end page, and the consumer terminal (7) is allowable to transmit the covered verification data to be verified (51') of the verification-information-to-be-verified (5') to the database module (3).
